# EUROPÄISCHE PATENTSCHRIFT

(11) **EP 3 064 169 B1**
(45) Veröffentlichungstag und Bekanntmachung des Hinweises auf die Patenterteilung: **24.04.2019**
(21) Anmeldenummer: 15157543.8
(22) Anmeldetag: 04.03.2015
(51) Int. Cl.: A61C 13/00, A61C 13/08, A61C 13/083, A61C 13/20

(54) **VERFAHREN ZUR HERSTELLUNG EINER DENTALKERAMIK SOWIE DENTALKERAMIK-ERZEUGUNGSVORRICHTUNG**
METHOD OF MANUFACTURING DENTAL CERAMIC WORKPIECES AND APPARATUS FOR MANUFACTURING DENTAL CERAMIC WORKPIECES
PROCÉDÉ DE FABRICATION DE PIÈCES CÉRAMIQUES DENTAIRES ET APPAREILS POUR LA FABRICATION DE PIÈCES DE CÉRAMIQUE DENTAIRE

(43) Veröffentlichungstag der Anmeldung: 07.09.2016
(73) Patentinhaber: Ivoclar Vivadent AG, 9494 Schaan (LI)
(72) Erfinder: Ebert, Jörg, 9470 Buchs (CH); Frei, Christian, 39025 Naturns (IT)
(74) Vertreter: Baronetzky, Klaus

(56) Entgegenhaltungen:
- CA-A1- 2 356 631
- DE-A1- 10 037 352
- FR-A1- 2 956 050
- JP-B2- 2 880 697
- US-A- 4 161 208
- US-A- 5 406 999
- US-A1- 2002 125 592
- US-A1- 2006 151 480
- US-A1- 2008 233 542
- US-A1- 2009 136 901
- US-A1- 2009 155 736

## Beschreibung

Die Erfindung betrifft eine Muffelbasis für die Dentaltechnik gemäß dem Oberbegriff von Anspruch 1 und ein Verfahren zur Herstellung einer Dentalrestauration in einer Muffelbasis gemäß dem Oberbegriff von Anspruch 8.

Es ist seit langem bekannt, für die Herstellung von Dentalrestaurationen nach dem Prinzip der verlorenen Form zu arbeiten. Hierzu wird zunächst ein Positivmodell der Dentalrestauration in geeigneter Weise hergestellt, und zwar aus Wachs oder einer anderen rückstandsfrei verbrennbaren Substanz wie einem Polymer.

Dieses Positivmodell wird dann über einen Zubringerkanal, der beispielsweise als stiftförmiges Element aus dem gleichen Material wie das Positivmodell der Dentalrestauration besteht, mit einer sogenannten Muffelbasis verbunden. Diese Muffelbasis besteht aus einer aus Kunststoff bestehenden Scheibe, aus der ein zapfenförmiger Vorsprung, der so genannte Muffeldorn, aufragt, dessen Stirnfläche als Basis für den Zubringerkanal verwendet wird.

Nachdem das einzelne Positivmodell bzw. ggf. mehrere gemeinsam in einer Muffel zu platzierende Modelle (in Form eines sogenannten Wachsbaumes) zusammen mit den jeweiligen Zubringerkanälen aufgebracht sind, wird gegebenenfalls auch ein kleiner Radius am Übergang zwischen Zubringerkanal und den Dentalrestaurationen einerseits bzw. der Stirnfläche der Muffelbasis andererseits angebracht, was in der Regel als Verschwemmen bezeichnet wird.

Auf die scheibenförmige Muffelbasis, die einen Absatz aufweist, wird dann ein Silikonring aufgesteckt und in den so gebildeten Innenraum wird eine selbsthärtende Vergussmasse eingegossen. Diese kann beispielsweise aus Gips oder anderen geeigneten Materialien bestehen.

Nach dem Aushärten wird der Silikonring abgezogen oder abgerollt und die Muffelbasis in der Regel mit einer Druckbewegung abgezogen. Hierbei löst sich die Verbindung zwischen
der Stirnfläche und dem Zubringerkanal oder den Zubringerkanälen, während die Wachsbestandteile zunächst noch in der ausgehärteten Muffel verbleiben.

Die Muffel wird dann erwärmt, und zwar auf eine Temperatur, die eine rückstandsfreie Entfernung der Wachsbestandteile ermöglicht. Dies kann beispielsweise in einem sogenannten Vorwärmofen geschehen, der eine Temperatur von 700°C bereit hält.

Hieran anschließend wird die Muffel mit den nunmehr anstelle der Positivmodelle verbleibenden Hohlräume oder dem anstelle des Positivmodells verbleibenden Hohlraums umgedreht, so dass der Kanal, der dem Zapfen bzw. dem Dorn der Muffelbasis entsprach, nach oben freiliegt. Dieser Kanal ist zugleich der Presskanal, und in ihn wird mindestens ein Rohling aus einem Material eingebracht, das für die Ausbildung der Dentalrestaurationen geeignet ist, beispielsweise aus einer Dentalkeramik.

Ein Pressofen weist einen Pressstempel auf, der in den Presskanal eindringt und nach einem vorgegebenen Pressprogramm wird der oder die Rohlinge zusammen mit der Muffel weiter erwärmt, beispielsweise auf größenordnungsmäßig 1.100°C bei einer Silikat- oder Feldspatkeramik, oder auf 1.600°C bei einer Oxidkeramik.

Nach einem exakt vorgegebenen Pressprogramm werden dann Druck und Erwärmung im Einklang zueinander gesteuert, so dass das Rohlingsmaterial beim Schmelzen über die Zubringerkanäle in den Hohlraum oder die Hohlräume eindringt und dort nach Möglichkeit blasenfrei die Dentalrestaurationen erzeugt werden.

Das hier beschriebene Verfahren ist seit mindestens 30 Jahren bekannt und wird heute in weitem Umfang eingesetzt.

Es ist auch seit längerem vorgeschlagen worden, für die Herstellung des Positivmodells einer Dentalrestauration, basierend auf einem dreidimensionalen Scan des Mundes des Patienten, sowie nach dem computergesteuerten Modellieren für die Erzeugung des Positivmodells, ein generatives Verfahren einzusetzen. Ein Beispiel hierfür ist das aus der WO 95/28688 A1 bekannte Verfahren, gemäß welchem per Rapid-Prototyping ein Positivmodell hergestellt wird, das als Basis für die Abformung einer Negativform oder verlorenen Form dienen kann.

An sich sind derartige Rapid-Prototyping-Verfahren, die auch hinsichtlich der Auflösung für die Dentaltechnik grundsätzlich geeignet sind, beispielsweise die Stereolithografie, bereits ebenfalls seit recht langer Zeit bekannt, nämlich ebenfalls seit den 80er Jahren.

Im Dentalbereich ist immerhin gemäß der WO 95/28688 A1 seit etwa 20 Jahren die Verwendung der Rapid-Prototyping-Technik für die Herstellung von Modellen bekannt, zu denen auch das vorstehend angeführte Positivmodell gehört.

Trotz der insofern seit recht langer Zeit bekannten und an sich auf der Hand liegenden Vorteile des computergestützten Designs hat sich diese Technik bisher nicht durchgesetzt.

Es ist auch bereits vorgeschlagen worden, anstelle der Herstellung des Dentalrestaurationsteils mittels Pressen ein solches über einen Gießvorgang zu erzeugen. Auch diese Technik ist an sich seit langem bekannt.

In neuerer Zeit ist hierzu vorgeschlagen worden, ein Positivmodell per Computerunterstützung zu erzeugen, und zwar generativ, um so die Notwendigkeit des Frässchritts zu vermeiden. Bei diesem Vorschlag hat die Schwierigkeit eine Rolle gespielt, dass beim Fräsen komplexe Innenecken nur sehr schwer zu realisieren sind. Das Gießen eines Formhohlraums in einer Muffel erlaubt es, die Dentalrestauration zentral in der Muffel vorzusehen. Mit der Absicht, einen möglichst geringen Temperaturgradienten innerhalb der Muffel zu erreichen, wird bspw. versucht, zusätzlich zu der die Muffel ringförmig umgebenden Heizung über eine Zusatzheizung im Boden eine bessere Vergleichmäßigung der Temperatur innerhalb der Muffel zu realisieren.

Die so vorgeschlagene Erzeugung der Dentalrestauration hat aber zwei wesentliche Nachteile, so dass nicht verwunderlich ist, dass sich dieser Vorschlag nicht durchgesetzt hat: Zum einen lässt sich bei zentraler Anordnung mit einer Muffel lediglich eine einzige Dentalrestauration erzeugen, was extrem unwirtschaftlich ist. Zum anderen bringt die Presstechnik im Vergleich zu der Frästechnik eine deutlich bessere und naturnähere Oberflächenqualität mit sich.

Darüberhinaus ist bereits vorgeschlagen worden, für ein realitätsnäheres Erscheinungsbild unterschiedliche Dentalkeramikmaterialien, auch mit Füllstoffen, die auch miteinander kombiniert werden können, einzusetzen. Ein solches Verfahren lässt sich beispielsweise aus der US 6,345,984 B2 entnehmen.

DE 100 37 352 A1 offenbart eine Muffelbasis gemäß dem Oberbegriff des Anspruchs 1.

Es ist auch bereits vorgeschlagen worden, zwei zueinander passende Formen von Einzelkomponenten für eine Dentalrestauration in einem CAD/CAM-Verfahren herzustellen und diese miteinander in einem Fügeschritt zu verbinden. Diese Lösung ist jedoch recht aufwändig und führt zu einer bestimmten Ungewissheit der Höhenlage, je nach Dicke der manuell aufgetragenen Klebeschicht zwischen den Einzelkomponenten.

Ferner ist es bereits vorgeschlagen worden, zwei unterschiedlich gefärbte Keramikmassen zusammenzupressen und an dem Zubringerkanal an geeigneter Stelle eine Ausbuchtung anzubringen, um dadurch den Anteil einer der Keramikmassen an der fertigen Dentalrestauration zu reduzieren. Diese Lösung hat sich jedoch in der Praxis ebenfalls nicht durchgesetzt; für die Festlegung des Übergangs sind meist Probepressungen erforderlich, so dass dieses Verfahren vom Aufwand her nicht gerechtfertigt ist.

Demgegenüber liegt der Erfindung die Aufgabe zugrunde, eine Muffelbasis für die Dentaltechnik gemäß dem Oberbegriff von Anspruch 1 und ein Verfahren zur Herstellung einer Dentalrestauration in einer Muffelbasis gemäß dem Oberbegriff von Anspruch 10 bereitzustellen, die die Erstellung einer Dentalrestauration in hoher Qualität und sehr wirtschaftlich ermöglichen, welche auch gerade bei Verwendung von Lithiumdisilikat als Dentalkeramikmaterial besonders geeignet sein soll und darüber hinaus auch leichter zu beherrschen ist.

Diese Aufgabe wird erfindungsgemäß durch die Ansprüche 1 und 8 gelöst. Vorteilhafte Weiterbildungen sowie Verfahren ergeben sich aus den Unteransprüchen.

Bei der erfindungsgemäßen Muffelbasis ist eine gegenüber einer konventionellen (dem bisherigen Stand der Technik entsprechenden) einstückig gefertigten Muffelbasis verringerte Höhe des Muffeldorns vorgesehen. An seinem oberen Ende schließt der Muffeldorn mit einer vorzugsweise im Wesentlichen planen Stirnfläche ab. (Dieses obere Ende ist jenes, welches dem Sockel der Muffelbasis gegenüber liegt, der beim Gießen der Einbettmasse den Abschluss des mit der Einbettmasse zu vergießenden Innenraumes bildet.) Auf dieser Stirnfläche kann nun mit einer geeigneten Verbindung, beispielsweise einem Rast- oder Klickverschluss oder auch einer durch entsprechend gewählte Abmaße der korrespondierenden Elemente erreichbaren Presspassung, ein erfindungsgemäßer Dornaufsatz mit seiner ebenfalls planen Anlagefläche angebracht werden. Weitere Möglichkeiten der Verbindung sind korrespondierende konkav/konvexe Oberflächen, Hexagonal - oder Bajonettverbindungen. Im Wesentlichen sollten die Verbindungen möglichst aus einer Kombination von Positivform auf der einen und Negativform auf der anderen Seite der herzustellenden Verbindung bestehen. Diese Trennung des nach dem bisherigen Stand der Technik einstückigen, d.h. vom Sockel bis zur Stirnfläche durchgehenden, Muffeldorns in einen verkürzten unteren Muffeldorn, der bei den im Folgenden beschriebenen erfindungsgemäßen Ausführungsformen unverändert bleibt, und einen separaten Dornaufsatz hat den Vorteil, dass die erfindungsgemäße Muffelbasis universell eingesetzt werden kann. Durch die verschiedenen möglichen Formen des Dornaufsatzes kann die Muffelbasis jedoch individuell auf die Art und Weise der Weiterverarbeitung abgestimmt werden. Da die Muffelbasis (mit dem verkürzten Muffeldorn) wiederverwendet wird, der Muffeldorn, je nach Ausführungsform, entweder auch wiederverwendet, als Einwegteil verworfen oder aber ausgebrannt wird, wird trotz der so möglichen optimalen weise geringen Umfang vorrätig zu haltender Formteile (Muffelbasis, verschiedene Dornaufsätze) möglich.

Der im Wesentlichen zylindrische Dornaufsatz entspricht in seinem Durchmesser im Wesentlichen dem Durchmesser des zylindrischen Muffeldorns. Dadurch ist gewährleistet, dass sich der Dornaufsatz mit seiner Anlagefläche nahtlos und hinsichtlich seiner Mantelfläche bündig an den Muffeldorn anschließt.

Dieser nahtlose Übergang ist von großer Bedeutung, da der Muffeldorn zusammen mit dem Dornaufsatz gemeinsam die Negativform für den in der Einbettmasse auszubildenden Presskanal bildet. In diesem Presskanal werden später während des sich anschließenden Verpressens einer oder mehrere Keramikrohlinge unter Wärmeeinwirkung in die sich an den Presskanal anschließenden Formhohlräume verpresst.

Ein nahtloser Übergang vom Muffeldorn zum Dornaufsatz stellt insofern sicher, dass der Pressstempel der Pressvorrichtung ungehindert bis zum Ende des Presskanals, welches von der oberen Stirnseite des Dornaufsatzes vorgegeben ist, eindringen kann.

Das hat den Vorteil, dass der Pressstempel eines herkömmlichen Pressofens ohne die Notwendigkeit einer Modifikation bspw. des Pressstempels das Material des Rohlings bis zum Ende des Presskanals aus diesem heraus in die sich dort anschließenden Zuführkanäle pressen kann. Dadurch ist es überraschend einfach möglich, auch mit einer Muffel, die mithilfe der erfindungsgemäßen Muffelbasis erstellt wurde, das Rohlingsmaterial nahezu restlos aus dem Presskanal in die Formhohlräume zu verpressen und eine Materialverschwendung zu vermeiden. Diese könnte sich dadurch ergeben, dass der Presskanal durch einen gegenüber einer konventionellen Muffelbasis längeren Muffeldorn tiefer in die Einbettmasse hineinreicht und ein konventioneller Pressstempel sich durch eine zu geringe Länge nicht bis zum Ende dieses Presskanals hineinbewegen könnte.

Darüber hinaus ist es von Vorteil, wenn die verflüssigte Masse des Pressrohlings entlang einer durchgehend glatten Wandung des Presskanals in die Formhohlräume gepresst werden kann. Dadurch werden unerwünschte Verwirbelungen des Materials verhindert, die sich beispielsweise im Bereich eines nicht ausreichend glatten (also nahtlosen) Übergangs des Muffeldorns zum Dornaufsatz ergeben könnten. Solche Verwirbelungen könnten bspw. den unerwünschten Einschluss von Luftbläschen verursachen, welcher dann die herzustellenden Dentalrestaurationsteile unbrauchbar machen würde.

In einer ersten Ausführungsform des Dornaufsatzes ist dieser derart ausgestaltet, dass er zusammen mit dem gegenüber einer konventionellen Muffelbasis verkürzten Muffeldorn der erfindungsgemäßen Muffelbasis die Höhe des Muffeldorns derart ergänzt, dass die resultierende Gesamthöhe des Muffeldorns mit aufgesetztem Dornaufsatz der Höhe des Muffeldorns einer konventionellen Muffelbasis entspricht. Darüber hinaus entspricht die Formgebung und Ausgestaltung des oberen Endes des Dornaufsatzes im Wesentlichen der Form und Ausgestaltung einer konventionellen Muffelbasis.

Mit dem aufgesetzten Dornaufsatz unterscheidet sie sich von ihren Abmessungen her also nicht von einer konventionellen Muffelbasis. Ist der erfindungsgemäße Dornaufsatz zudem auch noch aus dem gleichen Material wie die erfindungsgemäße Muffelbasis hergestellt, kann ein solcher Dornaufsatz, ebenso wie die Muffelbasis, im Grunde auch mehrfach wiederverwendet werden. Der Dornaufsatz ist bei dieser Konfiguration bevorzugt drehfest mit dem Muffeldorn verbunden.

Eine Drehverbindung zwischen Muffeldorn und Dornaufsatz wäre bei dieser Ausführungsform ungeeignet, weil dadurch beim Entfernen der (nicht ausbrennbaren) Muffelbasis aus der erhärteten Einbettmasse die Gefahr des unbeabsichtigten Ausdrehens des Dornaufsatzes aus dem Muffeldorn bestünde. Der Dornaufsatz könnte in der Einbettmasse der Muffel steckenbleiben und den Presskanal blockieren, was im Falle des ebenfalls nicht ausbrennbaren Dornaufsatzes problematisch wäre.

Entsprechend der ersten bevorzugten Ausführungsform ist es damit möglich, dass ein Zahntechniker die erfindungsgemäße Muffelbasis konventionell, also wie bisher gewohnt einsetzen kann, indem er den erfindungsgemäß verkürzten Muffeldorn der Muffelbasis mit dem Dornaufsatz entsprechend der ersten Ausführungsform verbindet und an der oberen Stirnseite des Dornaufsatzes wie gewohnt die Wachsformen der zu erstellenden Dentalrestaurationsteile manuell anwachst.

Durch die erfindungsgemäße Muffelbasis mit verkürztem Muffeldorn ist es überraschend einfach möglich, die Muffelbasis entweder, wie oben beschrieben, wie bisher üblich, (konventionell) zu verwenden, oder sie aber mit einem der im Folgenden beschriebenen weiteren Ausführungsformen eines Dornaufsatzes zu verwenden. Die Muffelbasis ist insofern universell einsetzbar, aber durch die verschiedenen Dornaufsätze individuell an die verschiedenen Herstellungsverfahren bestmöglich anpassbar.

Alternativ kann der erfindungsgemäße Dornaufsatz gemäß der ersten bevorzugten Ausführungsform aus dem gleichen Material wie das für die (ausbrennbaren) Positivmodelle verwendete bestehen, oder zumindest aus einem ebenfalls ausbrennbaren anderen Material. In diesem Fall ist eine verdrehsichere Befestigung des Dornaufsatzes auf dem Muffeldorn also nicht nötig, da der nun ebenfalls ausbrennbare Dornaufsatz in der Einbettmasse verbleiben kann. Stattdessen ist an der Verbindungsstelle zwischen (wiederverwendbarem) Muffeldorn und (ausbrennbarem) Dornaufsatz bevorzugt eine Sollbruchstelle oder eine Solltrennstelle vorgesehen, die eine zuverlässige Trennung des Muffeldorns von dem Dornaufsatz beim Entfernen der Muffelbasis sicherstellt.

Auch wenn hier jeweils von aus Wachs (oder einem ähnlichen wachsartigen Werkstoff) bestehenden Positivmodellen der zu erstellenden Dentalrestaurationsteile die Rede ist, versteht es sich, dass auch andere rückstandsfreie entfernbare Materialien wie bspw. Polymere Verwendung finden können. Es ist dabei unerheblich, auf welche Weise diese Positivmodelle erstellt worden sind. Neben einem konventionellen Abdruck der Mundsituation des Patienten und einer daraus erstellten Positivform kann bspw. auch ein auf einem 3D-Scan basierendes virtuelles Modell Verwendung finden, welches dann in einem CAM-Arbeitsschritt, bspw. in einer CNC-Fräsmaschine, aus einem geeigneten Werkstoff herausgearbeitet wird.

Der Dornaufsatz ist im Wesentlichen trog- oder napfförmig ausgestaltet. Seine Außenkontur entspricht wieder im Wesentlichen einer zylindrischen Form, und sein Außendurchmesser ist identisch mit dem des erfindungsgemäßen Muffeldorns der Muffelbasis.

Der Aufsatz ist so gestaltet, dass er sich, wie bereits weiter oben beschrieben, nahtlos an den Muffeldorn der erfindungsgemäßen Muffelbasis anschließt. Jedoch weist der Aufsatz gemäß dieser zweiten Ausführungsform eine napfförmige Ausgestaltung auf, mit einer, von der Stirnseite des Muffeldorns aus betrachtet, sich nach oben erstreckenden Schürze mit einer vergleichsweise geringen Wandstärke. In dem sich damit ergebenden zylindrischen Innenraum des Aufsatzes kann nun der Fuß eines Wachsbaumes im Wesentlichen spielfrei aufgenommen werden. Als Wachsbaum werden allgemein die zumeist miteinander zentral verbundenen zwei oder mehr Wachsmodelle bezeichnet, die über die Anstiftkanäle (bzw. die späteren Zuführkanäle ausbildenden und die Positivmodelle tragenden Wachsstifte) mit einander verbunden sind. Im einfachsten Fall kann ein solcher Wachsbaum auch lediglich einen Zubringerkanal zusammen mit einem einzelnen Wachsmodell tragen. Es versteht sich, dass der Fuß eines solchen Wachsbaumes einen Zylinder bildet, der hinsichtlich seines Außendurchmessers den Innenabmessungen des zylindrischen Innenraumes des Dornaufsatzes entspricht und diesen im Wesentlichen vollständig ausfüllt.

Die Höhe des Fußes des Wachsbaumes und dementsprechend die an ihrer Innenseite vorhandene Höhe der Schürze des Dornaufsatzes gemäß dieser zweiten Ausführungsform kann in weiten Grenzen den Erfordernissen angepasst werden. In jedem Fall ist die Höhe der Schürze so zu wählen, dass eine sichere und feste Verankerung des Wachsbaumes in dem Dornaufsatz gewährleistet ist, so dass der Wachsbaum während des Vergießens mit der Einbettmasse sich nicht neigen, kippen oder herausfallen kann.

Da die obere, also die Anstiftkanäle der Positivmodelle tragende, Stirnseite des Wachsbaumes beim Vergießen mit der Einbettmasse als dessen Negativform das spätere untere Ende des Presskanals repräsentiert, muss sichergestellt werden, dass die Höhe der Schürze, die den Fuß des Wachsbaumes vollumfänglich umgibt, geringer oder höchstens identisch mit der Höhe des flachzylindrischen Fußes ist. Eine hinsichtlich ihrer Höhe über den Fuß des Wachsbaumes hinausragende Schürze würde einen nicht im Wesentlichen zylindrischen Abschluss des Presskanals erzeugen. Durch einen solchen Schürzenüberstand würde am Ende des Presskanals eine ringförmige Nut ausgebildet werden, in die Material des zu verpressenden Rohlings eindringen würde, wobei dieses Material dann nicht für das Füllen der Formhohlräume für die zu erstellenden Dentalrestaurationsteile zur Verfügung stünde. Ein unnötig hoher Materialverbrauch wäre die Folge.

Erfindungsgemäß bevorzugt ist es vorgesehen, dass die jeweiligen auf dem Dornaufsatz befestigten Anstiftkanäle an ihren sich zu der Anlagefläche des Dornaufsatzes hin erstreckenden Enden zur Vermeidung scharfer Kanten und spitzer Winkel verschwemmt werden.

Der Fuß des erfindungsgemäßen Wachsbaums ist segmentiert ausgeführt. Das bedeutet, dass die bevorzugt durch Rapid-Prototyping-Verfahren herzustellenden verlorenen Modelle der zu erstellenden Dentalrestaurationen (aus einem ausbrennbaren Material) jeweils über einen Zubringerkanal (Anstiftkanal) mit einem Segment des Fußes verbunden wird, in etwa nach Art eines Tortenstückes.

Die Größe der Segmente oder Tortenstücke richtet sich dabei nach der Anzahl der gleichzeitig in einer Muffel zu erstellenden Einzeldentalrestaurationen. Sollen bspw. drei Dentalrestaurationsteile gemeinsam in einer Muffel hergestellt werden, so ist das Segment des Fußes eines jeden Modells der einzelnen individuellen Dentalrestaurationsteile ein Zylinder- bzw. Kreischeibensegment, dessen Grundfläche nach außen hin von einem Kreisbogensegment von 120° begrenzt wird. Es versteht sich, dass die Höhen der in diesem Beispiel drei Kreisscheibensegmente jeweils identisch sind und der mindestens erforderlichen Höhe der Schürzeninnenwand des Dornaufsatzes, wie weiter oben beschrieben, entsprechen.

Erfindungsgemäß bevorzugt ist es vorgesehen, dass der Winkel der einzelnen Kreisscheibensegmente sich jeweils reziprok zur Anzahl n der gemeinsam auf dem Dornaufsatz zu befestigenden Positivmodelle verhält und dass sich die n identischen Kreisscheibensegmente zu einem Vollkreis mit 360° ergänzen, wobei jedes Kreisscheibensegment einen Winkel (alpha) = 360°/n aufweist.

Durch die Segmentierung des Fußes ist es möglich, die einzelnen Modelle der zu erstellenden Dentalrestaurationsteile unabhängig voneinander zu entwerfen und anzufertigen. Bei der Erstellung müssen erfindungsgemäß für das Verpressen wichtige Parameter, die für alle Modelle gemeinsam relevant sind, bei allen einzelnen zu entwerfenden Dentalrestaurationen Berücksichtigung finden, um ein gleichmäßiges Pressergebnis bei allen individuellen Dentalretaurationsteilen sicherstellen zu können. Beim computergestützten Entwurf der Wachsmodelle können solche Parameter, eine entsprechende Vernetzung der Entwurfsarbeitsplätze vorausgesetzt, automatisch berücksichtigt werden.

Es versteht sich, dass fehlende Kreisscheibensegmente auch durch Blindsegmente ersetzt werden können, wenn bspw. während der Planung von vier gemeinsam in einer Muffel herzustellenden Dentalrestaurationsteilen ausgegangen wurde, im späteren Verlauf des Herstellungsprozesses dann jedoch nur drei Positivmodelle in dem erfindungsgemäßen Dornaufsatz aufgenommen werden sollen. Das bedeutet, dass die Kreisscheibensegmente der einzelnen Positivmodelle jeweils mit 90° entworfen sein würden (entsprechend vier Segmenten, die sich zu einem gemeinsamen Fuß ergänzen). Die Leerstelle des nun fehlenden Kreisscheibensegmentes von 90°, das entsprechend der anfänglichen Planung das vierte (dann aber bspw. nicht mehr benötigte) Positivmodell getragen hätte, kann dann erfindungsgemäß durch ein Kreisscheibensegment, welches kein Positivmodell mit entsprechendem Anstiftkanal trägt, ausgefüllt werden.

Auf diese Weise kann der Innenraum des napfförmigen Dornaufsatzes gemäß der zweiten bevorzugten Ausführungsform trotzdem vollständig ausgefüllt werden, um einen festen Halt der Kreis scheibensegmente zu gewährleisten und den verfahrenstechnisch bedingt benötigten zylindrischen Hohlraum des Presskanals durchgängig bis zu dessen Ende realisieren zu können.

Erfindungsgemäß bevorzugt ist es vorgesehen, dass die den gemeinsamen flachzylindrischen Fuß bildenden einzelnen Kreisscheibensegmente an ihren jeweils zum benachbarten Kreisscheibensegment weisenden Flächen mittels eines im Wesentlichen rückstandsfrei ausbrennbaren Klebemittels miteinander verklebt sind.

Erfindungsgemäß bevorzugt ist es ferner vorgesehen, dass die dem Dornaufsatz zugewandte Stirnseite des aus den einzelnen Kreisscheibensegmenten gebildeten flachzylindrischen Fußes mindestens ein Verbindungselement aufweist, mit welchem sich der flachzylindrische Fuß, bevorzugt steckbar, mit dem Dornaufsatz verbinden lässt.

Zur Gewährleistung eines festen Sitzes der Kreisscheibensegmente in dem napfförmigen Dornaufsatz kann der Durchmesser des aus den Kreisscheibensegmenten gebildeten Fußes beispielsweise um einen geringen Betrag größer gewählt werden, als der Innendurchmesser des von der Schürze begrenzten zylindrischen Innenraumes des Dornaufsatzes. Durch die so erzeugte Presspassung wären die Kreisscheibensegmente sicher gegen Kippen, Neigen oder Herausfallen fixiert. Eine andere Möglichkeit wäre bspw. eine in der Innenseite der Schürze um laufende ringförmige Nut, in die entsprechende Rastnasen an den Außenseiten der Kreisscheibensegmente eingreifen könnten.

Darüber hinaus wird in der europäischen Patentanmeldung EP 14 171 268.7, auf die hier vollinhaltlich Bezug genommen wird, ein Verfahren zur automatisierten Positionierung der individuellen Modelle innerhalb einer gemeinsamen Muffel beschrieben, wobei bspw. Mindestabstände der einzelnen Positivmodelle zur Muffelaußenkante und optimierte Winkel oder Querschnitte der zu entwerfenden Anstift- bzw. Zuführkanäle zwischen dem (gemeinsamen) Presskanal der Muffel und den individuellen Formhohlräumen computergestützt ermittelt werden.

Mit einem solchen Verfahren ist es somit auch möglich, den Entwurf der individuellen verlorenen Positivmodelle, die gemeinsam mit ihren Fußsegmenten, wie oben beschrieben, einen "virtuellen" vollständigen flachzylindrischen Wachsbaumfuß bilden, zu realisieren. Es versteht sich hierbei (wie weiter oben angedeutet), dass die einzelnen Entwürfe über zentrale Datenbanken usw. miteinander in einer geeigneten Weise vernetzt sein können, um alle relevanten Parameter für die geplante gemeinsame Muffel abzugleichen und ein die hohen geforderten Qualitätsansprüche erfüllendes Pressergebnis zu jedes Dentalrestaurationsteil innerhalb der gemeinsamen Muffel sicherzustellen.

Alternativ zu der zweiten Ausführungsform ist auch ein abgewandeltes Verfahren möglich, bei dem die einzelnen Segmente des Fußes nicht in einen napfförmigen Hohlraum eingesteckt werden, sondern stattdessen mit Hilfe eines geeigneten Klebemittels (was sich, wie das Material der Modelle selbst, ebenfalls weitestgehend rückstandsfrei ausbrennen lassen muss) miteinander zu verbinden. Dazu wird an den senkrechten rechteckigen Flächen der einzelnen Kreisscheibensegmente, die jeweils zu einer der beiden rechteckigen Flächen des unmittelbar benachbarten Kreisscheibensegmentes weisen, ein ausbrennbares Klebemittel aufgebracht und letztendlich alle Kreisscheibensegmente, die zusammen einen Vollkreis ergeben, miteinander verbunden. Dadurch ergibt sich aus den einzelnen korrespondierenden Kreisscheibensegmenten ein vollständiger Fuß, der dann über eine geeignete Verbindung auf den entsprechend angepassten Dornaufsatz aufgesetzt werden kann.

Diese Verbindung zwischen dem Fuß und dem Dornaufsatz kann bspw. ein sich zentral aus der unteren Stirnfläche des Fußes nach unten erstreckender Zapfen sein, der in eine entsprechende zentrale Öffnung in der oberen Stirnfläche des Dornaufsatzes entsprechend dieser alternativen zweiten Ausführungsform eingesteckt werden kann. Durch eine im Wesentlichen spielfreie Passung des Zapfens in einer entsprechend vorgesehenen Muffeldornöffnung oder auch durch einen entsprechenden Klebemittelüberschuss, der aus diesem ebenfalls aus den einzelnen miteinander verklebten Fußsegmenten hervortritt, kann der so entstandene Fuß des Wachsbaumes mit dem Dornaufsatz unverlierbar verbunden werden. Eine sich senkrecht nach oben erstreckende Schürze (des weiter oben beschriebenen napfförmigen Dornaufsatzes) ist bei dieser alternativen Ausführungsform nicht nötig. Der erfindungsgemäße Dornaufsatz dieser alternativen Ausführungsform kann somit im Wesentlichen die Form eines einfachen Flachzylinders haben.

Um beim späteren Verpresssen der Rohlinge zu filigrane Strukturen in der Einbettmasse, die unter der Druckbelastung beim Pressen brechen könnten, zu vermeiden, kann die Ausbildung spitzer Winkel durch Verschwemmen vermieden werden. Durch zusätzlichen Material-auftrag von ausbrennbarem Material, in der Regel Wachs, werden bspw. spitze Winkel in der ausgehärteten Einbettmasse in gerundete Kanten überführt.

Vor allem bei der letztgenannten (alternativen) Ausführungsform ist ein nachträgliches Verschwemmen der Ränder der Fußsegmente auf der Stirnfläche des Dornaufsatzes sowie der auf der gegenüberliegenden Seite ggf. vorhandenen Klebekanten bevorzugt. Um ein Überschreiten des Au ßendurchmessers des Dornaufsatzes (der ja dem des Muffeldorns entspricht) zu vermeiden, kann es sinnvoll sein, den Durchmesser des "virtuellen" Wachsbaumfußes, der sich aus den einzelnen verklebten Fußsegmenten zusammensetzt, um einen gewissen Betrag geringer zu dimensionieren als den Durchmesser des Dornaufsatzes. Dadurch ist es möglich, trotz des durch den beim Verschwemmen nötigen seitlichen Materialauftrags zu verhindern, dass der Durchmessers des Fußes des Wachsbaumes nach dem Verschwemmen den des Dornaufsatzes überschreitet.

Die Daten aus dem virtuellen Modell der CAD-Entwürfe können dann bspw. an ein Rapid Prototyping-Gerät übertragen werden, welches die Positivmodelle zusammen mit den zugehörigen Anstift- bzw. Zuführkanälen generativ erzeugt. In der Dentaltechnik wird hierzu häufig ein Stereolithografiegerät eingesetzt. Insbesondere die Höhe des Fußes ist hierbei in den Daten des CAD-Entwurfes abgelegt.

Mit den beiden vorgenannten Ausführungsformen ist es dem Zahntechniker bzw. Anwender möglich, die digital geplanten und fertigungstechnisch in physische Restaurationen umgesetzte Arbeiten durch ein simples Zusammenführen, bevorzugt vollständig auf der digitalen Ebene, von Elementen für den Folgeprozess, also das Einbetten und Verpressen, vorzubereiten. Alternativ kann das Zusammenführen der einzelnen Komponenten auf dem herkömmlichen Weg manuell bzw. mechanisch erfolgen.

In einer weiteren bevorzugten Ausführungsform ist der Dornaufsatz, der wiederum mittels einer Klickverbindung oder in einer anderen Form bevorzugt einrastend mit dem erfindungsgemäßen Muffeldorn verbunden ist, so ausgestaltet, dass er im Wesentlichen eine Zylinderform aufweist. An seiner Mantelfläche können sich in diesem Fall im Wesentlich radial von der Symmetrieachse des Dornaufsatzes weg erstreckende Plättchen befestigt werden. Hierzu weist der Dornaufsatz als Aufnahmen für die Plättchen an seiner Mantelfläche beispielsweise entsprechend vorgefräste Nuten oder Bohrungen auf, die sich in der entsprechend benötigten Anzahl gleichmäßig über den Umfang des Zylinders des Dornaufsatzes verteilen.

In der europäischen Patentanmeldung EP 14 171 444.4, auf die hier ebenfalls vollinhaltlich Bezug genommen wird, wird die Herstellung von Keramikdentalrestaurationen beschrieben, die aus verschiedenen Materialien z.B. hinsichtlich ihrer Farbe oder Opazität bestehen. Über einen computergestützten Entwurf ist es möglich, die räumliche Verteilung der verschiedenen Komponenten über die Positionierung, den Querschnitt und teilweise auch die Variierung der Form der Plättchen, die in diesem Fall die Funktion des Anstift- bzw. Zuführkanals übernehmen, innerhalb der zu erstellenden Dentalrestauration festzulegen. Dies hat den Vorteil, dass auf diese Art zuverlässig und reproduzierbar die Erzeugung einer Dentalkeramik aus mindestens zwei unterschiedlichen Keramikarten möglich ist.

Die vorstehend genannten Plättchen (die also als Negativform für die Zuführkanäle dienen) können mit einem geeigneten Verbindungselement, passend zu den weiter oben beschriebenen Nuten oder Bohrungen, an dem erfindungsgemäßen Dornaufsatz befestigt werden. An der dem Dornaufsatz gegenüberliegenden Seite dieser Plättchen ist das Positivmodell der entsprechend zu fertigenden Mehrfarbdentalrestauration ausgebildet. Der Dornaufsatz dient auch in dieser Ausführungsform als Teil der Form für den gemeinsamen Presskanal. In diesen Presskanal werden nach dem Aushärten der Muffel die entsprechend dem Computerentwurf vorgegebenen Multicolor-Pressrohlinge eingebracht und anschließend verpresst.

Durch das individuelle Variieren der Höhe der Plättchen (d.h., durch den vertikalen Offset der Plättchen, bezogen bspw. auf die untere Stirnseite des Dornaufsatzes) sowie durch die individuell berechneten Querschnitte und Formen der einzelnen Plättchen ist eine für jedes in der Muffel zu fertigende Dentalrestaurationsteil individuelle Verteilung der optischen Eigenschaften möglich.

In einer besonders bevorzugten Ausführungsform ist der Dornaufsatz, der ebenfalls lösbar mit dem erfindungsgemäßen Muffeldorn verbunden ist, so ausgestaltet, dass er direkt in einer hierfür geeigneten Aufnahme an einem Rapid-Prototyping-Gerät eingespannt werden kann. Damit ist es ohne zusätzliche Hilfsmittel möglich, zum Beispiel mit einem Stereolithografiegerät, einen aus mehreren Positivmodellen bestehenden Wachsbaum mit den entsprechenden Anstift- bzw. Zuführkanälen direkt an dem Dornaufsatz zu erzeugen. Ein nachträgliches manuelles Anbringen der generativ erzeugten Positivmodelle ist somit nicht erforderlich, was zum einen eine Ersparnis bei den erforderlichen Arbeitsgängen einerseits als auch die Verringerung des Risikos der Beschädigung des erzeugten Wachsbaumes beim sonst manuell erforderlichen Einsetzen in oder an den Dornaufsatz minimiert.

Die letztgenannte Ausführungsform bietet u.a. zusätzlich den Vorteil, dass hier eine durchgehend digitale Prozesskontrolle realisiert werden kann. Die finale Platzierung des Wachsbaumes auf dem Dornaufsatz erfolgt hier bereits während des Fertigungsprozesses.

Es versteht sich, dass alle Komponenten, wie die Basis des Dornaufsatzes, die Anstift- bzw. Zuführkanäle wie auch die Positivmodelle, jeweils auch einzeln oder in beliebiger Kombination gemeinsam mittels Stereolithografie gefertigt werden können.

Auch bei dem in der Stereolithografie notwendigen Reinigungsschritt bietet der Dornaufsatz gemäß dieser letztgenannten Ausführungsform den Vorteil, dort als standardisierte Halterung zu fungieren.

Besonders günstig ist es bei den vorstehend beschriebenen Ausführungsformen, dass der gegenüber dem einer konventionellen Muffelbasis verkürzte Muffeldorn durch das lösbare Aufsetzen eines Dornaufsatzes der Muffeldorn auf die Gesamtlänge entsprechend der Länge eines konventionellen Muffeldorns verlängert wird.

Durch diese Maßnahme muss an den Geräten (z.B. der Pressofen) zur Weiterverarbeitung solcher derart erstellten Muffel keinerlei Veränderung vorgenommen werden. Die Länge des Pressstempels eines herkömmlichen Pressofens ist somit uneingeschränkt auch für Muffeln, die mit der erfindungsgemäßen Muffelbasis erstellt worden sind, geeignet, da die Länge des Presskanals identisch mit dem einer Muffel ist, die mit einer konventionellen Muffelbasis hergestellt wurde.

Wenn im Falle der dritten Ausführungsform systembedingt ein Dornaufsatz mit einer größeren Höhe eingesetzt wird, kann bei einem solcherart bedingten verlängerten Presskanal zur Kompensation ein Distanzstück zusammen mit dem Pressstempel verwendet werden. Alternativ kann auch die Höhe des Muffeldorns um einen entsprechenden Betrag geringer ausgeführt werden, um die ggf. vorhandene größere Höhe des Dornaufsatzes zu kompensieren.

Somit wäre auch in diesem Fall die uneingeschränkte Verwendbarkeit der vorhandenen konventionellen Geräte wie bspw. der Pressöfen gewährleistet.

Weitere Vorteile, Einzelheiten und Merkmale der Erfindung ergeben sich aus der nachstehend Beschreibung mehrerer Ausführungsbeispiele anhand der Zeichnungen.

Es zeigen:
- Fig. 1: eine schematische Ansicht einer erfindungsgemäßen Muffelbasis mit einem verkürzten Muffeldorn;
- Fig. 2: eine schematische Ansicht der Ausgestaltung des Muffeldorns gemäß der ersten bevorzugten Ausführungsform;
- Fig. 3: eine schematische Ansicht der Ausgestaltung des Muffeldorns gemäß der zweiten bevorzugten Ausführungsform;
- Fig. 4: die Anordnung der einzelnen Positivmodelle mit segmentiertem Fuß, zur Benutzung in dem Dornaufsatz gemäß Fig. 3;
- Fig. 5: die Aufteilung des Fußes in Segmente, entsprechend der benötigten Anzahl;
- Fig. 6: eine schematische Darstellung der dritten Ausführungsform (nicht beansprucht);

- Fig. 7: eine weitere Darstellung der dritten Ausführungsform;
- Fig. 8: eine schematische Darstellung der vierten besonders bevorzugten Ausführungsform; und

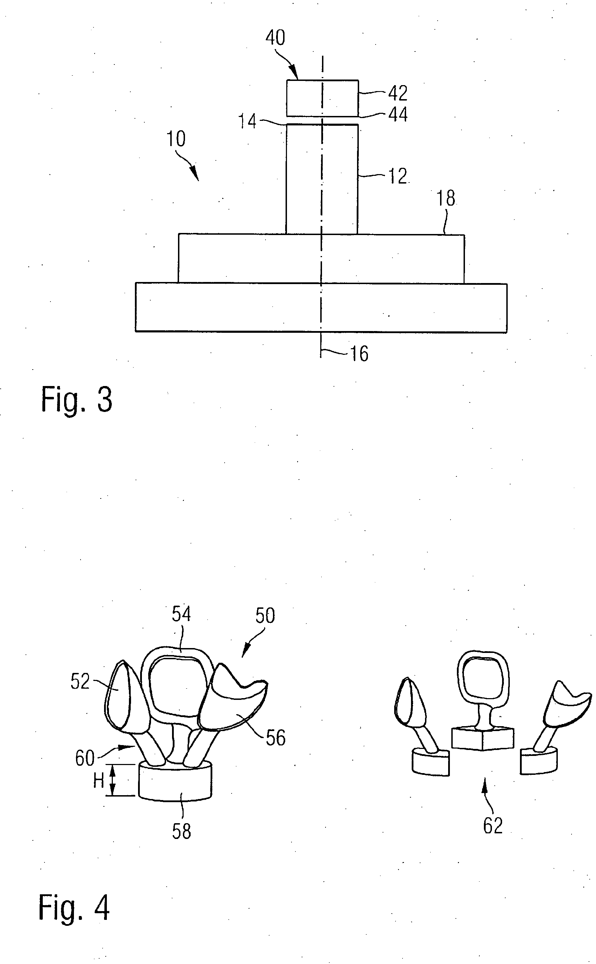

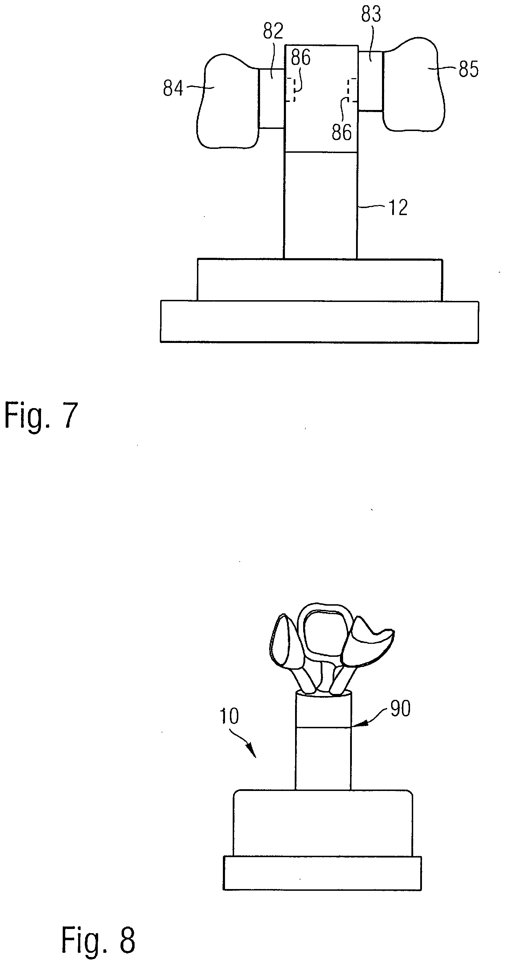

- Fig. 8: eine schematische Detaildarstellung des Dornaufsatzes gemäß der alternativen zweiten Ausführungsform gemäß Fig. 4.

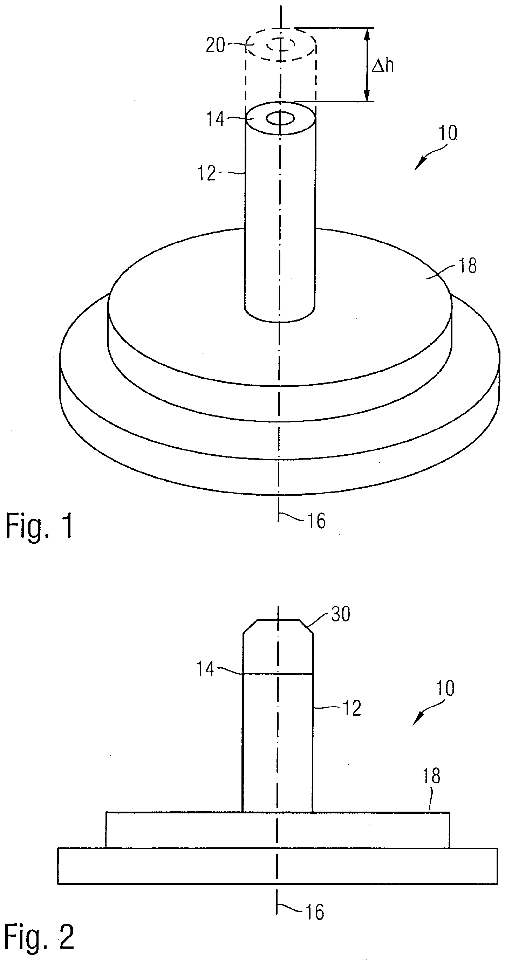

In Fig. 1 ist eine Muffelbasis 10 mit einem gegenüber einer konventionellen Muffelbasis verkürzten Muffeldorn 12 dargestellt. Dessen obere Stirnseite 14 befindet sich um den Betrag Δh entlang der Symmetrieachse 16 in Richtung der Basisfläche 18 versetzt. Der Abstand Δh entspricht der Längendifferenz des erfindungsgemäßen Muffeldorns, gemessen zwischen dessen Stirnseite 14 und der gestrichelt angedeuteten Stirnfläche 20 einer Standardmuffelbasis.

Aus Fig. 2 ist der Dornaufsatz 30 entsprechend der ersten bevorzugten Ausführungsform ersichtlich. Der Muffelaufsatz 30 erstreckt sich von der oberen Stirnfläche 14 koaxial und mit zum Muffeldorn 12 identischen Durchmesser nach oben. Die Höhe des Dornaufsatzes 30 entspricht der Längendifferenz Δh zwischen der Länge des erfindungsgemäßen Muffeldorns 12 und der Länge eines konventionellen Muffeldorns einer Standardmuffelbasis.

Der Dornaufsatz 30 entsprechend der ersten bevorzugten Ausführungsform ist durch eine einrastende Verbindung, bspw. eine Klickverbindung, lösbar, aber unverlierbar mit dem Muffeldorn 12 verbunden. Durch die Kombination des Muffeldorns 12 und aufgesetztem Dornaufsatz 30 entspricht die resultierende Form der Muffelbasis hinsichtlich ihrer Größe als auch ihrer Ausgestaltung und Funktion der einer konventionellen Muffelbasis.

Fig. 3 zeigt einen Dornaufsatz gemäß einer zweiten bevorzugten Ausführungsform. Bei dieser ist ein napf- bzw. trogförmiger Dornaufsatz 40 auf den Muffeldorn aufgesetzt. Der nach oben offene Hohlzylinder des Dornaufsatzes 40 hat eine Schürze 42, welche sich mit einer vergleichsweise geringen Wandstärke von der unteren Stirnfläche 44, die der Stirnfläche 14 des Muffeldorns 12 benachbart ist, nach oben erstreckt. Die innere Höhe der Schürze 42 entspricht dabei im Wesentlichen der Höhe H des gemeinsamen Fußes 58 der miteinander verbundenen Wachsmodelle 50, welcher in Fig. 4 dargestellt ist.

Die miteinander verbundenen Wachsmodelle in Fig. 4 umfassen drei Positivmodelle 52, 54, 56, die über ihre zugehörigen Anstift- bzw. Zuführkanäle 60 mit dem gemeinsamen Fuß 58 verbunden sind. Die Anstiftkanäle bilden dabei gleichzeitig die Negativform für die Zuführkanäle, durch die das zu verpressende Keramikmaterial in die Formhohlräume eindringt,die durch die Positivmodelle 52, 54, 56 in der Einbettmasse (nicht dargestellt) gebildet werden, und tragen die Positivmodelle bzw. fixieren diese im Raum relativ zum Fuß 58. Nach dem Vergießen der Muffel mit der Einbettmasse und deren Aushärten werden die Positivmodelle 52, 54, 56 sowie die Anstiftkanäle 60 durch eine Wärmebehandlung im Wesentlichen rückstandsfrei ausgebrannt. Zurück bleiben die vorstehend erwähnten Hohlräume.

Entsprechend der zweiten bevorzugten Ausführungsform sind die einzelnen Positivmodelle je einzeln erstellt worden und haben je ein Fußsegment, wie rechts im Bild Fig. 4 dargestellt. Im Falle der Fig. 4 ergeben die drei Fußsegmente der Positivmodelle 52, 54 und 56 zusammen einen Vollkreis bzw. einen Flachzylinder. Jedes Fußsegment spannt demzufolge einen Winkel von 120° auf, und die drei Fußsegmente sind in ihrer Höhe je identisch. Werden die drei 120°-Segmente passend zusammengefügt, können sie in den Innenraum des Hohlzylinders 40 gemäß Fig. 3 eingesetzt werden. Bei einer entsprechenden Dimensionierung ist ein spielfreier fester Sitz des segmentierten Fußes in dem Dornaufsatz gemäß Fig. 3 gewährleistet. Es versteht sich, dass die Höhe H dabei der Höhe der Innenwand 42 des Hohlzylinders 40 entspricht.

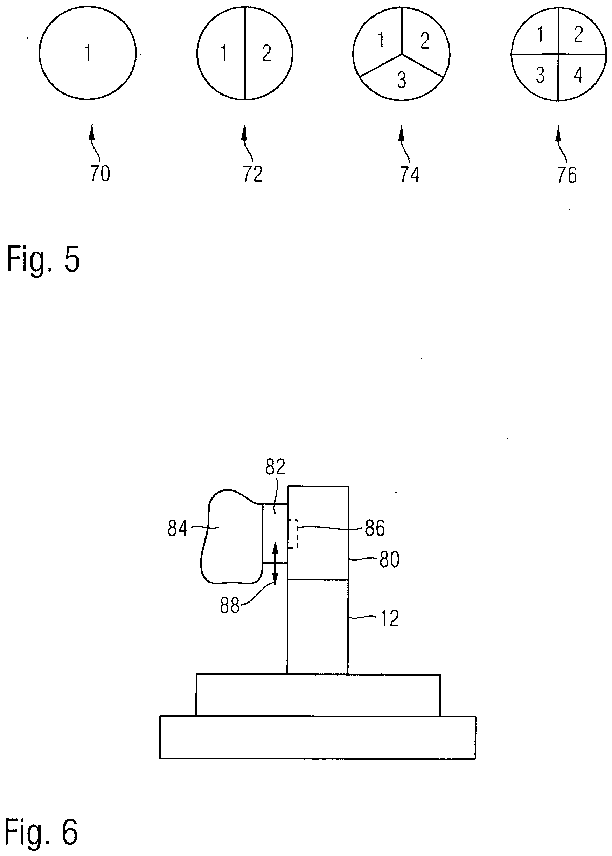

Aus Fig. 5 ist ersichtlich, wie der flachzylindrische Fuß der miteinander verbundenen Wachsmodelle, entsprechend der Anzahl der Positivmodelle, segmentiert ist. Ganz links ist nur ein Positivmodell nach dem Stand der Technik vorgesehen (verdeutlicht durch die »1«), der Kreis der Draufsicht auf die Stirnfläche 70 ist vollständig (nicht beansprucht). Mit dem einfach unterteilten Fuß 72 ist die gleichzeitige Aufnahme von zwei Positivmodellen (verdeutlicht durch die »1« und die »2«) in dem Hohlzylinder 40 gemäß Fig. 3. Der Fuß 74 ist entsprechend drei- und der Fuß ganz rechts in Fig. 5 viergeteilt, auch größere Anzahlen von Positivmodellen sind vorstellbar.

Es versteht sich, dass der erfindungsgemäße flachzylindrische Fuß anstelle der identischen Form der einzelnen Kreisscheibensegmente auch aus einer anderen geeigneten Kombination, bspw. aus einem halbkreisförmigen und zwei viertelkreisförmigen Segmenten bestehen kann. Es besteht hinsichtlich der Aufteilung des Flachzylinders keine Einschränkung, solange die einzelnen Segmente zusammengefügt den flachzylindrischen Fuß, der in den napfförmigen Dornaufsatz gemäß der zweiten Ausführungsform passt, bilden.

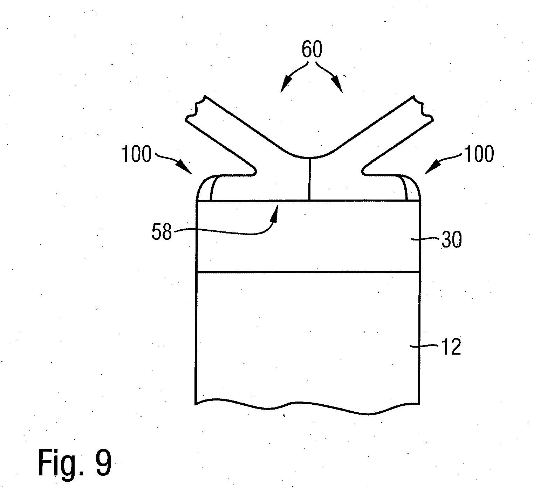

In der zur zweiten bevorzugten Ausführungsform alternativen Ausführungsform ist anstelle der Schürze 42, wie sie in Fig. 3 abgebildet ist, lediglich eine flachzylindrische Ausführungsform des Dornaufsatzes 30 vorgesehen. Dies ist in Fig. 9 dargestellt. Der Fuß 58, der in diesem Fall aus miteinander verklebten Kreisscheibensegmenten besteht, hat einen Gesamtdurchmesser, der etwas geringer ist als der des Dornaufsatzes 30. Durch das Verschwemmen des Randes 100, welches der Vermeidung scharfer Kanten und spitzer Winkel in der ausgehärteten Einbettmasse dient, wird dieser Unterschied der Durchmesser von Dornaufsatz 30 und Fuß 58 ausgeglichen. Der besseren Orientierung wegen sind Muffeldorn 12 wie auch die beiden Anstiftkanäle 60 sind in Fig. 9 je nur angedeutet dargestellt.

Die dritte bevorzugte Ausführungsform des Dornaufsatzes ist aus Fig. 6 ersichtlich. Hier ist ein, im Vergleich zu den anderen Ausführungsformen längerer Aufsatz 80 zu sehen, an dem seitlich, sich radial von diesem weg erstreckend, ein im Wesentlichen quaderförmiges Plättchen 82 gelagert, welches wiederum ein Positivmodell 84 der zu erstellenden Dentalrestauration trägt.

Über eine geeignete Verbindung zwischen dem Dornaufsatz 80 - in Fig. 6 ist eine Nut- und Federverbindung 86 angedeutet - und dem Anstiftkanal 82 sind diese steckbar miteinander verbunden. Es versteht sich, dass neben der in Fig. 6 dargestellten Verbindung, bestehend aus einer im Wesentlichen rechteckigen Nut im Dornaufsatz 80 und einem in diese Nut passenden, im Wesentlichen quaderförmigen Vorsprung, auch jede andere geeignete Verbindung, bspw. aus Bohrungen (im Dornaufsatz) und entsprechend passenden Zylinderstiften (am Plättchen 82) gewählt werden kann. Die Verbindung 86 muss lediglich sicherstellen,
dass das Plättchen 82 hinsichtlich seiner vertikalen Position (betrachtet in Pfeilrichtung 88) fixiert und gegen Verdrehen gesichert ist.

Bei dieser Ausführungsform ist es durch die Verwendung von (nicht abgebildeten) Multicolor-Pressrohlingen und durch die Variierung der vertikalen Position des Plättchens 82 (welche durch den Pfeil 88 angedeutet ist), seines Querschnitts sowie ggf. auch seiner Form (bspw. durch Einschnürungen oder Anschrägungen, abweichend von einer streng quaderförmigen Ausgestaltung) möglich, eine Dentalrestauration zu erstellen, die aus mehreren verschiedenen Materialien besteht, die bspw. farblich voneinander abweichen.

Dadurch ist ein realitätsnäheres Erscheinungsbild der fertigen Dentalrestauration erzielbar. Während der Übersichtlichkeit halber in Fig. 6 nur ein Plättchen 82 und ein Positivmodell 84 dargestellt ist, versteht es sich, dass um den Umfang der Mantelfläche des zylindrischen Dornaufsatzes 80 auch mehrere Plättchen 82 und Positivmodelle 84 angeordnet sein können.

Eine Steuerung der derart bspw. erreichbaren Farbverläufe ist in erster Linie durch die Verschiebung der vertikalen Position des Plättchens 82 bzw. 83, wie aus Fig. 7 ersichtlich, relativ zum Dornaufsatz 80 sowie zu den Positivmodellen 84 bzw. 85 möglich. Trotz der deutlich sichtbaren Abweichung der vertikalen Position der Plättchen 82 und 83 befinden sich die Verbindungselemente 86 jeweils auf gleicher Höhe. Die vertikale Position der Plättchen, wie auch deren ggf. voneinander abweichender Querschnitt, wird in einem CAD-Verfahren bestimmt und individuell für jedes gemeinsam an dem Dornaufsatz 80 zu befestigende Positivmodell berechnet. Die einzelnen Positivmodelle werden dafür, im Wesentlichen gleichmäßig. um den Umfang der Mantelfläche des Dornaufsatzes verteilt an dem Dornaufsatz 80 angebracht, wie dies mit den zwei in Fig. 7 dargestellten Positivmodellen 84 und 85 angedeutet ist.

Es ist, vor allem im Zusammenhang mit einer computergestützten Erstellung der Positivmodelle, auch möglich, die einzelnen Komponenten wie den Dornaufsatz, die Anstift- bzw. Zuführkanäle (z.B. Plättchen 82, 83) oder auch die Positivmodelle selbst, die je nach gewähltem Verfahren gefräst oder mittels Stereolithografie aufgebaut werden, mit Verbindungs- und Rotationssicherungen oder auch Sollbruchstellen versehen werden können, was eine gemeinsame Anwendung der Teile erlaubt. Diese vorgenannten einzelnen Komponenten können desweiteren als Standardteile in der CAD-Software digital hinterlegt sein.

Die weitere (nicht beanspruchte) Ausführungsform ist in Fig. 8 dargestellt. Diese ist zur direkten Aufnahme in einer Stereolithografievorrichtung vorgesehen, so dass der dort dargestellte Wachsbaum unmittelbar an dem Dornaufsatz 90 direkt erzeugt werden kann. Dabei wird der Dornaufsatz innerhalb des Bades des zu polymerisierenden (noch flüssigen) Materials auf der Ablage bzw. Plattform derart gelagert, dass die zu erzeugende Wachsbaumstruktur direkt auf der oberen Stirnfläche des Dornaufsatzes erzeugt werden.

Ein nachträgliches manuelles Einsetzen des generativ erzeugten Wachsbaumes, mit der damit verbundenen Gefahr der Beschädigung, entfällt hier. Auch für die in der Stereolithografie nötige Reinigung kann der Dornaufsatz 90 als Halterung fungieren. Mit dieser besonders bevorzugten vierten Ausführungsform kann die gesamte Erstellung und Produktion der verlorenen Modelle digital kontrolliert werden, was menschliche Fehler zu minimieren hilft.

Alternativ zu einem aus einem nicht ausbrennbaren Material bestehenden Dornaufsatz kann auch der Dornaufsatz 90 gemäß der vierten besonders bevorzugten Ausführungsform bereits selbst aus dem (ausbrennbaren) Material bestehen, aus dem über das vorstehend genannte generative Verfahren, bspw. die Stereolithografie, dann auch der Wachsbaum der Positivmodelle erzeugt wird. Ein solcher Dornaufsatz würde dann nach dem Vergießen und Aushärten der Einbettmasse zusammen mit den Positivmodellen ausgebrannt werden.

## Patentansprüche

1. Muffelbasis (10) für die Dentaltechnik, mit einem Muffeldorn (12) als Basis für das Anbringen von Dentalrestaurations-Vorprodukten, insbesondere Positivmodellen (52, 54, 56), insbesondere über Anstiftkanäle (60), zur Verwendung in einer mit aushärtbarem Material füllbaren Muffel, wobei der Muffeldorn (12) sich im Wesentlichen zylindrisch erstreckt und eine Stirnfläche aufweist, und wobei im Bereich der Stirnfläche oder in der Stirnfläche Verbindungselemente angebracht oder ausgebildet sind, die mindestens einen Dornaufsatz (30) lösbar lagern, welcher Dornaufsatz (30, 40, 80, 90) für die Aufnahme mindestens eines Anstiftkanals für das Dentalrestaurations-Vorprodukt ausgebildet Ist oder diesen ausbildet, **dadurch gekennzeichnet, dass** der Dornaufsatz (30, 40, 80, 90) Verbindungselemente zur Befestigung eines kreisscheibenförmigen bzw. flachzylindrischen Fußes (58), welcher über zugehörige Anstiftkanäle (60) von mehreren Positivmodellen (52, 54, 56) abstützt, aufweist, um den Fuß (58) sicher gegen unbeabsichtigtes Kippen bzw. Neigen an bzw. auf dem Dornaufsatz (30, 40, 80, 90) zu lagern, wobei die Anstiftkanäle (60), entsprechend der Anzahl der auf dem Dornaufsatz (30, 40, 80, 90) gemeinsam zu befestigenden Positivmodelle (52, 54, 56), je mit einem Kreisscheibensegment (72, 74, 76) verbunden sind, wobei die einzelnen Kreisscheibensegmente (72, 74, 76) zusammen den flachzylindrischen Fuß (58) bilden, und wobei der flachzylindrische Fuß (58) in dem Dornaufsatz (30, 40, 80, 90) aufgenommen ist, der an seinem dem Muffeldorn (12) abgewandten oberen Ende an seinem Umfang eine sich nach oben erstreckende Schürze (42) in der Art eines Napfes, in welchem der flachzylindrische Fuß (58) im Wesentlichen spielfrei gelagert ist, ausbildet.

2. Muffelbasls (10) nach Anspruch 1, **dadurch gekennzeichnet, dass** der Dornaufsatz (30, 40, 80, 90) mindestens einen Anschlusskörper, der insbesondere scheibenförmig ist, aufweist, an welchem mindestens ein Anstiftkanal und mindestens eine Dentalrestauration je als Positivmodell befestigbar ist.

3. Muffelbasis (10) nach einem der Ansprüche 1 oder 2, **dadurch gekennzeichnet, dass** die dem Muffeldorn (12) zugewandte Anlagefläche des Dornaufsatzes (30) einen zum Durchmesser des Muffeldorns (12) identischen Durchmesser aufweist und sich insbesondere bündig zu dem Muffeldorn (12) an diesen anschließt.

4. Muffelbasis (10) nach einem der vorhergehenden Ansprüche, **dadurch gekennzeichnet, dass** der Dornaufsatz (30, 40, 80, 90) mit dem Muffeldorn (12) steckbar, insbesondere in den, oder an dem Muffeldorn (12) einrastend, verbunden ist.

5. Muffelbasis (10) nach einem der vorhergehenden Ansprüche, **dadurch gekennzeichnet, dass** der Dornaufsatz (30, 40, 80, 90) aus einem ausbrennbaren Material, insbesondere aus dem gleichen Material wie die Dentalrestaurations-Vorprodukte, besteht und/oder, dass der Dornaufsatz (30, 40, 80, 90) aus dem gleichen Material wie der Muffeldorn (12) besteht.

6. Muffelbasis (10) nach Anspruch 5, **dadurch gekennzeichnet, dass** der Dornaufsatz (30, 40, 80) verdrehsicher mit dem Muffeldorn (12) verbunden ist.

7. Muffelbasis (10) nach Anspruch 1, **dadurch gekennzeichnet, dass** die Höhe des aus den einzelnen Kreisscheibensegmenten (72, 74, 76) gebildeten flachzylindrischen Fußes (58) mindestens die Höhe der Schürze (42) des Napfes des Dornaufsatzes (30, 40, 80, 90), gemessen an der Innenseite der Schürze (42), entspricht oder diese Höhe überschreitet.

8. Verfahren zur Herstellung einer Dentalrestauration In einer Muffelbasis für das Anbringen von Dentalrestaurations-Vorprodukten, insbesondere Positivmodellen, insbesondere über Anstiftkanäle, nach einem der vorhergehenden Ansprüche, wobei im Bereich der Stirnfläche oder in der Stirnfläche Verbindungselemente, die mindestens einen Dornaufsatz lösbar lagern, angebracht oder ausgebildet werden, **dadurch gekennzeichnet, dass** ein kreisscheibenförmiger bzw. flachzylindrischer Fuß (58) über Verbindungselemente des Dornaufsatzes (30, 40, 80, 90) befestigt wird, wobei über dem Fuß (58) zugehörige Antstiftkanäle (60) eines oder mehrere Positivmodelle (52, 54, 56) abgestützt werden, wobei die Anstiftkanäle (60), entsprechend der Anzahl der auf dem Dornaufsatz (30, 40, 80, 90) gemeinsam zu befestigenden Positivmodelle (52, 54, 56), je mit einem Kreisschelbensegment (72, 74, 76) verbunden werden, wobel die einzelnen Kreisscheibensegmente (72, 74, 76) zusammen den flachzylindrischen Fuß (58) bilden, und wobei mindestens die Positivmodelle (52, 54, 56) und die zugehörigen Anstiftkanäle (60), bevorzugt auch die Verbindungselemente, insbesondere Rastnasen, zur Verbindung der Positivmodelle (52, 54, 56) und Anstiftkanäle (60) mit dem Dornaufsatz (30, 40, 80, 90), durch ein generatives Verfahren, beispielsweise durch ein Rapid Prototyping-Gerät, bevorzugt ein Stereolithografiegerät, hergestellt werden.

9. Verfahren nach Anspruch 8, **dadurch gekennzeichnet, dass** auch der Dornaufsatz (30, 40, 80, 90) durch ein generatives Verfahren, beispielsweise durch ein Rapid Prototyping-Gerät, bevorzugt ein Stereolithografiegerät, erstellt wird.

10. Verfahren einem der Ansprüche 8 oder 9, **dadurch gekennzeichnet, dass** ein aus den einzelnen Kreisscheibensegmenten (72, 74, 76) gebildeter Fuß (58) an seinem Außenumfang, welcher geringer ist als der Außenumfang des diesen tragenden Dornaufsatzes (30, 40, 80, 90), zur Vermeidung scharfer Kanten und spitzer Winkel verschwemmt wird und dabei der Material-auftrag während des Verschwemmens so gewählt wird, dass das seitlich an der Umfangsfläche des Fußes (58) aufgetragene Material die durch die Differenz zwischen Fußumfang und Umfang des Dornaufsatzes (30, 40, 80, 90) gebildete Stufe im Wesentlichen vollständig ausfüllt.

## Claims

1. A muffle base (10) for dental technology, having a muffle mandrel (12) as a base for attaching dental restoration precursors, especially positive models (52, 54, 56), especially via sprue channels (60), for the use in a muffle to be able to be filled with curable material, the muffle mandrel (12) substantially extending cylindrically and having an end face, and wherein connecting elements are mounted or formed in the region of the end face or in the end face which detachably mount at least one mandrel attachment (30), which mandrel attachment (30, 40, 80, 90) is formed for receiving or forming at least one sprue channel for the dental restoration precursor, **characterized in that** the mandrel attachment (30, 40, 80, 90) comprises connecting elements for mounting a circular disc-shaped or flat cylindrical bottom part (58), which is supported by a plurality of positive models (52, 54, 56) via associated sprue channels (60), in order to secure the bottom part (58) against unintentional tilting or tilting at or against the bottom part (58). on the mandrel attachment (30, 40, 80, 90), wherein the sprue channels (60), corresponding to the number of positive models (52, 54, 56) to be fastened together on the mandrel attachment (30, 40, 80, 90), are each connected to a circular disc segment (72, 74, 76), wherein the individual circular disc segments (72, 74, 76) together form the flat cylindrical bottom part (58), and the flat cylindrical bottom part (58) being accommodated in the mandrel attachment (30, 40, 80, 90) which, at its upper end facing away from the muffle mandrel (12), forms an upwardly extending skirt (42) at its circumference in a cup-like manner, in which the flat cylindrical bottom part (58) is mounted substantially without play.

2. The muffle base (10) according to claim 1, **characterised in that** the mandrel attachment (30, 40, 80, 90) has at least one connecting body, which is especially disc-shaped, to which at least a sprue channel and at least one dental restoration can each be attached as a positive model.

3. The muffle base (10) according to one of the claims 1 or 2, **characterized in that** the contact surface of the mandrel attachment (30) facing the muffle mandrel (12) has a diameter corresponding to the diameter of the muffle mandrel (12) and, in particular, adjoins the muffle mandrel (12) to be flush therewith.

4. The muffle base (10) according to one of the preceding claims, **characterized in that** the mandrel attachment (30, 40, 80, 90) is insertably connected to the muffle mandrel (12), and especially is in latching connection in or on the muffle mandrel (12).

5. The muffle base (10) according to one of the preceding claims, **characterized in that** the mandrel attachment (30, 40, 80, 90) consists of a combustible material, especially of the same material as the dental restoration precursors, and/or **in that** the mandrel attachment (30, 40, 80, 90) consists of the same material as the muffle mandrel (12).

6. The muffle base (10) according to claim 5, **characterized in that** the mandrel attachment (30, 40, 80) is non-rotatably connected to the muffle mandrel (12).

7. The muffle base (10) according to claim 1, **characterized in that** the height of the flat cylindrical bottom part (58) formed from the individual circular disc segments (72, 74, 76) corresponds at least to or exceeds the height of the skirt (42) of the cup of the mandrel attachment (30, 40, 80, 90), measured on the inside of the skirt (42).

8. A method for manufacturing a dental restoration in a muffle base for attaching dental restoration precursors, especially positive models, especially via sprue channels, according to one of the preceding claims, wherein in the region of the end face or in the end face, connecting elements are attached or formed, which detachably support at least one mandrel attachment, **characterised in that** a circular disc-shaped or flat cylindrical bottom part (58) is mounted via connecting elements of the mandrel attachment (30, 40, 80, 90), wherein associated sprue channels (60) of one or more positive models (52, 54, 56) are supported above the bottom part (58), wherein the sprue channels (60), corresponding to the number of positive models (52, 54, 56) to be mounted together onto the mandrel attachment (30, 40, 80, 90), are each connected to a circular disc element (72, 74, 76), wherein individual circular disc elements (72, 74, 76) together form the flat cylindrical bottom part (58), and wherein at least the positive models (52, 54, 56) and the associated sprue channels (60), preferably also the connecting elements, especially latching lugs, are manufactured for connecting the positive models (52, 54, 56) and sprue channels (60) to the mandrel attachment (30, 40, 80, 90), by a generative method, for example by a rapid prototyping device, preferably a stereolithography device.

9. The method according to claim 8, **characterized in that** the mandrel attachment (30, 40, 80, 90) is also produced by a generative method, for example by a rapid prototyping device, preferably a stereolithography device.

10. The method according to one of the claims 8 or 9, **characterized in that** a bottom part (58) formed from the individual circular disc segments (72, 74, 76), at its outer circumference, which is smaller than the outer circumference of the mandrel attachment (30, 40, 80, 90) carrying the latter, is formed such that sharp edges and acute angles will be prevented to occur, while material application during forming will be selected such that the material laterally applied to the circumferential surface of the bottom part (58) substantially completely fills the step formed by the difference between the bottom part's circumference and the circumference of the mandrel attachment (30, 40, 80, 90).

## Revendications

1. Base de cylindre (10) pour la technique dentaire, avec un mandrin de moufle (12) comme base pour l'installation de produits semi-finis de restauration dentaire, en particulier des modèles positifs (52, 54, 56), en particulier par le biais de canaux d'épinglage (60), pour une utilisation dans un moufle pouvant être rempli de matériau durcissable, où le mandrin du moufle (12) s'étend essentiellement cylindrique et présente une surface extérieure, et où dans la zone de la surface extérieure ou dans la surface extérieure des éléments de fixation sont installés ou formés, qui emmagasinent au moins un embout de mandrin (30) de manière amovible, ledit embout de mandrin (30, 40, 80, 90) étant formé pour recevoir au moins un canal d'épinglage pour le produit semi-fini de restauration dentaire ou forme celui-ci, **caractérisé en ce que** l'embout de mandrin (30, 40, 80, 90) présente des éléments de fixation pour le montage d'un pied sous forme de plateau circulaire ou de cylindre plat (58), qui est soutenu par plusieurs modèles positifs (52, 54, 56) par des canaux d'épinglage (60) associés, pour loger le pied (58) de manière sûre à abri de basculement accidentelle ou d'inclinaison contre ou sur l'embout du mandrin (30, 40 80, 90)), où les canaux d'épinglage (60), en fonction du nombre de modèles positifs (52, 54, 56) à fixer conjointement sur l'embout de mandrin (30, 40, 80, 90), sont reliés respectivement à un segment de disque circulaire (72, 74, 76), ou les segments de disque circulaire (72, 74, 76) individuels constituent ensemble le pied cylindrique plat (58) et où le pied cylindrique plat (58) est accueilli dans l'embout de mandrin (30, 40, 80, 90), qui à son extrémité supérieure détournée du mandrin du moufle (12) forme sur sa circonférence une jupe (42) s'étendant vers le haut situé à la partie supérieure du moufle dans le style d'une écuelle, dans laquelle pied cylindrique plat (58) est logé essentiellement sans jeu.

2. Base de cylindre (10) selon la revendication 1, **caractérisée en ce que** l'embout de mandrin (30, 40, 80, 90) présente au moins un corps de connecteur qui est en particulier en forme de disque, sur lequel au moins un canal d'épinglage et au moins une restauration dentaire respectivement peut être attaché comme modèle positif.

3. Base de cylindre (10) selon l'une des revendications 1 ou 2, **caractérisée en ce que** la surface de contact de l'embout de mandrin (30) tourné vers le mandrin de moufle (12) présente un diamètre identique au diamètre du mandrin de moufle (12) et s'attache à celui-ci en particulier en affleurement au mandrin de moufle (12).

4. Base de cylindre (10) selon l'une des revendications précédentes, **caractérisé en ce que** l'embout de mandrin (30, 40 80, 90) est relié au mandrin de moufle (12), en particulier de manière enfichable dans ou sur le mandrin de moufle (12).

5. Base de cylindre (10) selon l'une des revendications précédentes, **caractérisé en ce que** l'embout de mandrin (30, 40, 80, 90) est constitué d'un matériau calcinable, en particulier de la même matière que les produits semi-finis de restauration dentaire, et/ou que l'embout de mandrin (30, 40, 80, 90) est constitué du même matériau que le mandrin de moufle (12).

6. Base de cylindre (10) selon la revendication 5, **caractérisée en ce que** l'embout de mandrin (30, 40, 80) est connecté de manière bloqué en rotation avec le mandrin de moufle (12).

7. Base de cylindre (10) selon la revendication 1, **caractérisée en ce que** la hauteur du pied plat cylindrique (58), formé à partir des segments de disque circulaires (72, 74, 76) correspond au moins à la hauteur de la jupe (42) du bol de l'embout de mandrin (30, 40, 80. 90), mesurée à l'intérieur de la jupe (42), ou dépasse cette hauteur.

8. Procédé de fabrication d'une restauration dentaire dans un cylindre de base pour y installer des produits semi-finis de restauration dentaire, en particulier des modèles positifs, en particulier par des canaux d'épinglage, selon l'une des revendications précédentes, où, dans la zone de la surface extérieure ou dans la surface extérieure, des éléments de fixation, qui emmagasinent au moins un embout de mandrin (30) de manière amovible, sont installés ou formés, **caractérisé en ce qu'**un pied (58) sous forme de plateau circulaire ou de cylindre plat est fixé par le biais d'éléments de fixation de l'embout du mandrin (30, 40, 80, 90), où par des canaux d'épinglage (60) associés au pied (58) un ou plusieurs modèles positifs (52, 54, 56) sont soutenus, où les canaux d'épinglage (60), en fonction du nombre de modèles positifs (52, 54, 56) à fixer conjointement sur l'embout de mandrin (30, 40, 80, 90), sont reliés respectivement à un segment de disque circulaire (72, 74, 76), ou les segments de disque circulaire (72, 74, 76) individuels constituent ensemble le pied cylindrique plat (58) et où au moins les modèles positifs (52 54, 56), et les canaux d'épinglage (60) associés), de préférence ainsi que les éléments de fixation, en particulier les taquets d'encliquetage, pour fixer les modèles positifs (52, 54, 56) et les canaux d'épinglage (60) avec la fixation de l'embout du mandrin (30, 40, 80, 90) sont produits par un procédé génératif, par exemple, par le biais d'un dispositif de prototypage rapide, de préférence un dispositif de stéréolithographie.

9. Procédé selon la revendication 8, **caractérisé en ce qu'**aussi l'embout du mandrin (30, 40, 80, 90) est produit grâce à un procédé génératif, par exemple, par le biais d'un dispositif de prototypage rapide, de préférence un dispositif de stéréolithographie.

10. Procédé selon l'une des revendications 8 ou 9, **caractérisé en ce qu'**un pied (58) formé par les segments individuels du disque circulaire (72, 74, 76), sur sa circonférence extérieure, qui est plus petit que la circonférence extérieure de l'embout du mandrin (30, 40, 80, 90) portant celui-ci, est étamé afin d'éviter des bords coupants ou des angles pointus et pendant l'étamage l'apport de matériau est choisi de telle manière que le matériau apporté latéralement sur la surface circonférentielle (58) du pied (58) remplit essentiellement complètement le niveau formé par la différence entre la circonférence du pied et la circonférence de l'embout du mandrin (30, 40, 80, 90).
